# EUROPEAN PATENT APPLICATION

(11) **EP 3 530 426 A1**
(43) Date of publication of application: **28.08.2019**
(21) Application number: 19158528.0
(22) Date of filing: 21.02.2019
(51) Int. Cl.: B27C 9/02, B23Q 1/44, B24B 27/00

(54) **A PROFILING MACHINE**

(30) Priority: 26.02.2018 IT 201800003053
(71) Applicant: Ferrari & Cigarini S.R.L., 41053 Maranello (Modena) (IT)
(72) Inventor: FERRARI, Andrea, 41053 MARANELLO (MODENA) (IT)
(74) Representative: Casadei, Giovanni

(57) **Abstract**

A profiling machine, comprising: an annular guide (2), which defines a closed-loop path; a carriage (3), movable along the annular guide (2); a support arm (4), rotatably associated with the carriage (3) around a rotation axis (X); a profiling tool (10), associated with the support arm (4); a pusher (5), configured to drive the support arm (4) in rotation in an active direction, in order to push the profiling tool (10) towards a profile (P) to be machined.

## Description

The present invention relates to a profiling machine.

In particular, the invention relates to a machine for machining external or internal edges of slabs of various materials.

The machine is particularly advantageously utilisable in the machining of the edge of a profiled opening afforded through a slab. The profiled opening can be predisposed, for example, for mounting a wash basin.

Bathroom or kitchen units are presently available that are provided with an upper slab or "top" to which one or more wash basins can be associated, with relative taps. The slab is provided with a profiled opening through which the wash basin is accessible, being typically fixed below the slab. The edge of the opening must therefore be adapted to the profile and the shape of the wash basin, and must further be finished with great care.

At present the machining of the edge of the openings is carried out using manual tools provided with a rotary grinder. The tool is handled by an operator who manually follows the profile of the opening, adapting it to the shape of the underlying wash basin. To facilitate the correct guiding of the grinder, the tool is provided with a rest disc, coaxial to the grinder and projecting from the chuck at a certain distance from the grinder. The rest disc is substantially rested in proximity of the edge of the wash basin, beneath the edge of the opening, to maintain the grinder at a predetermined distance from the edge of the wash basin.

The use of the manual tools at present available is relatively unwieldly, as it requires work positions that are rather awkward for the operator. Furthermore, even with the presence of the rest disc, machining is not always sufficiently precise. It might occur that the operator exerts a non-constant pressure, or he tilts the tool differently during movement, which also has an effect on the displacement speed. It is therefore not infrequent for the edge to be imprecise or non homogeneous.

The object of the present invention is to provide a profiling machine which enables obviating the limits of the currently available technology.

A further advantage of the profiling machine according to the present invention is that it enables precise and uniform machining of the edge of an opening.

A further advantage of the profiling machine according to the present invention is that it also enables precise and uniform machining of openings having an edge profiling that is complex in shape.

Further characteristics and advantages of the present invention will become more apparent in the following detailed description of an embodiment of the present invention, illustrated by way of non-limiting example in the attached figures, wherein:

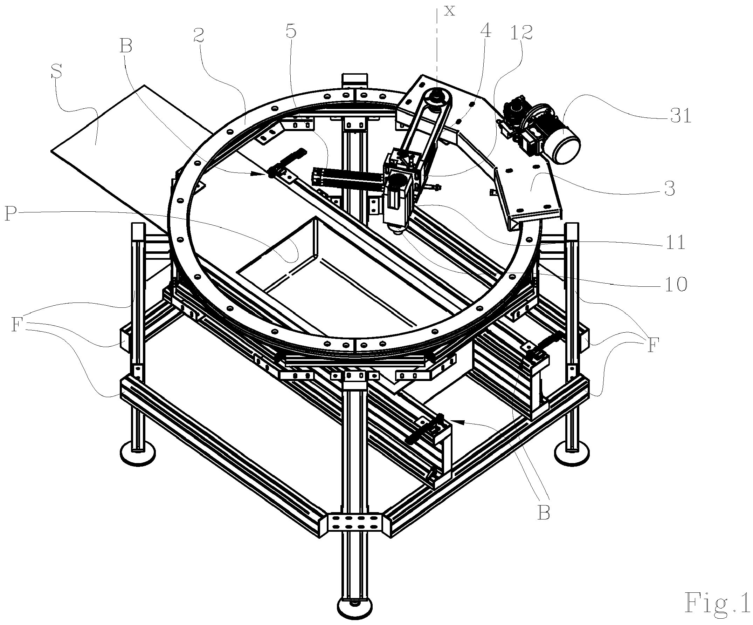

- figure 1 shows a schematic isometric view of the profiling machine according to the present invention, with a slab (S) in the working position;

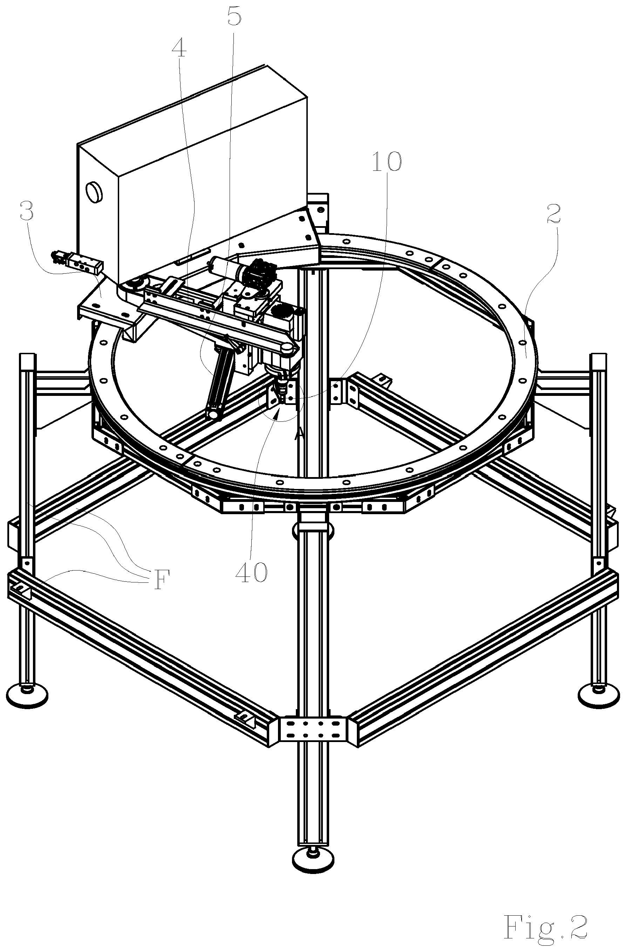

- figure 2 shows a second isometric view of the profiling machine according to the present invention, without the slab (S);
- figure 3 shows the enlargement (A) of figure 2;
- figure 4 shows an enlarged scale view of a working zone of the tool (10);

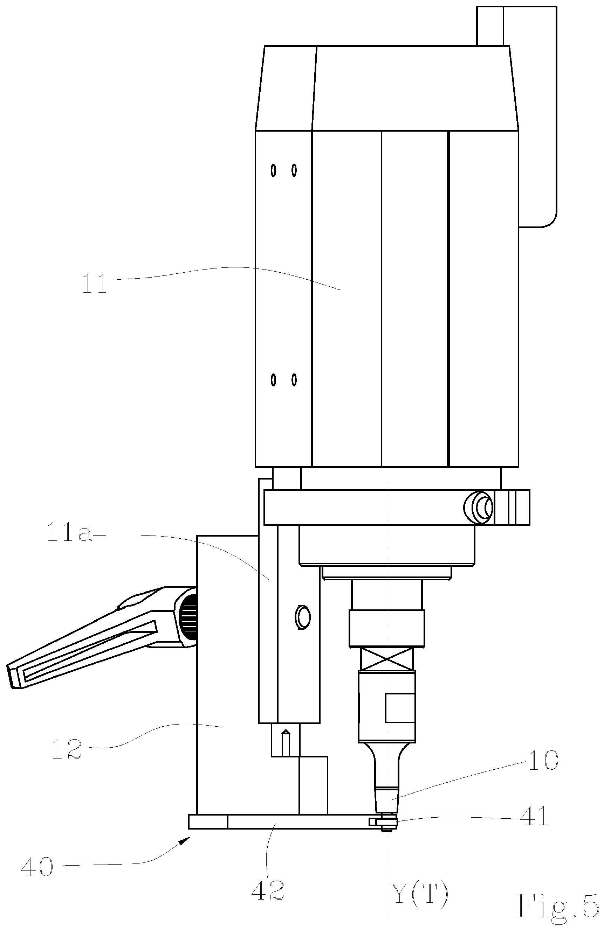

- figure 5 shows an enlarged scale view of some components of the profiling machine.

In the illustrated embodiment, the profiling machine according to the present invention is provided with a support frame (F), defined by a plurality of uprights and cross members that can be variously connected to one another to form a structure that can be rested on a ground surface. The support frame (F) is further provided with blocking means (B) for a slab (S) to be machined. The blocking means (B) are known to a person skilled in the sector, and for this reason will not be described in further detail.

In the figures, by way of example, a flat slab (S) is illustrated that is provided with an opening delimited by a profile (P). Preferably though not necessarily, the slab (S) is supported and blocked in a horizontal position by the blocking means (B). The profile (P) is substantially rectangular, but it could be differently shaped.

The profiling machine according to the present invention comprises an annular guide (2), which defines a closed-loop path, for example circular. The annular guide (2) is supported by the support frame (F) above the blocking means (B). The slab (S) can be positioned in such a way that the profile (P) is substantially centred with respect to the annular guide (2). Preferably, though not necessarily, the annular guide (2) lies on a horizontal plane.

A carriage (3) is movable along the annular guide (2). In substance, the carriage (3) follows a predetermined path which is defined by the annular guide (2). In the illustrated embodiment, the path followed by the carriage (3) is circular. Preferably, though not necessarily, the machine is equipped with a first motor (31) associated with the carriage (3) and predisposed to drive the carriage (3) in motion along the annular guide (2). For example, the first motor (31) is mounted on the carriage (3). A transmission mechanism is predisposed to transmit a drive force to the carriage (3) and/or to the annular guide (2). This mechanism is known to a person skilled in the sector, and for this reason will not be described in further detail. In an alternative embodiment, the carriage (3) is not equipped with a motor and can be pushed or drawn by hand along the annular guide (2). The machine further comprises a support arm (4), rotatably associated with the carriage (3) around a rotation axis (X). In the illustrated embodiment, the rotation axis (X) is substantially vertical. Preferably though not necessarily, the support arm (4) is pivoted to the carriage (3) at an end thereof. A profiling tool (10) is associated to the support arm (4). The profiling tool (10) is preferably a rotating tool driven rotatably by a second motor (11). The profiling tool (10) can be in the form of a grinder or a miller, activated in rotation about an axis which, in the illustrated embodiment, is substantially vertical. The profiling tool (10) can be connected to the support arm (4) by means of an attaching device (12) which enables regulating one or more of the following characteristics: the tilt of the rotation axis of the tool (10), the position of the tool (10) along the arm (4) and the height of the tool (10) with respect to the arm (4).

In the illustrated embodiment, the support arm (4) and the tool (10) project from the carriage (3) towards the inside of the annular guide (2), i.e. they are arranged inside the annular guide (2). In an alternative embodiment, the support arm (4) and the tool (10) might project from the carriage (3) towards the outside of the annular guide (2), i.e. they might be arranged outside the annular guide (2).

The profiling machine according to the present invention comprises a guide unit (40), structured to keep the tool (10) at a pre-fixed distance from a guide surface (L). The guide unit (40) is associated with the support arm (4).

The guide unit (40) comprises an abutment (41), predisposed to be positioned in contact with the guide surface (L) which, in turn, is located in a pre-fixed position with respect to the profile (P). Preferably, but not necessarily, the abutment (41) is located below the tool (10).

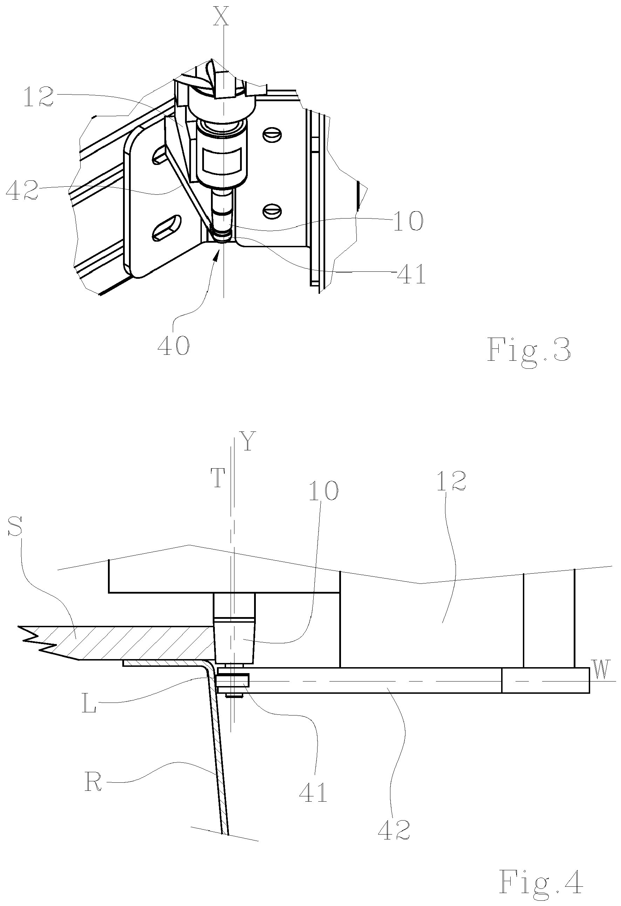

In a particularly advantageous use, the profiling machine is used for machining a profile (P) that has to follow the edge of a wash basin (R) associated with the slab (S) below the profile (P). In that case, the guide surface (L) is defined by the edge surface of the wash basin itself. As shown in figure 4, the abutment (41) is conformed and arranged so as to be positioned in contact with the edge of the wash basin, below the tool (10) and the slab (L).

Advantageously, the position of the abutment (41) with respect to the tool (10) is adjustable on a plane perpendicular to the rotation axis (X). This allows the tool (10) to be kept at a pre-fixed distance with respect to the guide surface (L), i.e. it allows the tool (10) to be kept at a pre-fixed distance with respect to the profile (P). In this way, following the machining of the tool (10), the profile (P) is necessarily located at a pre-fixed distance from the guide surface (L) along the whole extension thereof.

The advantage offered by the presence of the guide unit (40) is notable. In fact, in the case described in which a wash basin is associated with the slab (S) below the profile (P), the guide unit (40) allows the profile (P) to be machined so that it is at a pre-fixed and constant distance along the entire edge of the wash basin, also in the case in which the wash basin is not exactly centred with respect to the profile (P). In other words, if the wash basin is also associated with the slab (S) in a not perfectly centred position with respect to the opening delimited by the profile (P), at the end of the machining performed by the tool (10), guided by the abutment (41) that follows the guide surface (L) defined by the edge of the wash basin, the profile (P) is perfectly centred with respect to the guide surface (L) itself.

In a possible embodiment, the abutment (41) is in the form of a wheel, rotatable about a rotation axis (T) parallel to the rotation axis (X) of the support arm (4). In the embodiment shown, in which the tool (10) rotates about its own rotation axis (Y), the rotation axis (T) of the abutment (41) is parallel to the rotation axis (Y) of the tool (10) and to the rotation axis (X) of the arm (4).

In the embodiment shown, the abutment (41) is associated with a bracket (42) which, in turn, is associated with the attaching device (12). The bracket (42) is also slidable with respect to the attaching device (12) along at least a radial direction (W) which lies on a plane perpendicular to the rotation axis (X) of the arm (4), i.e. to the rotation axis (Y) of the tool (10). A guide and blocking means known to a person skilled in the art are predisposed to allow the blocking of the bracket (42) in a desired position. The movement of the bracket (42) with respect to the attaching device (12) allows the distance to be regulated between the rotation axis (T) of the abutment (41) and the rotation axis (Y) of the tool (10).

In turn, the tool (10) is slidable along a direction parallel to its own rotation axis (Y) with respect to the attaching device (12). For that purpose, a guide (11a), parallel to the rotation axis (Y) of the tool (10), is interposed between the attaching device (12) and the casing of the second motor (11), i.e. the motor that activates the tool (10). Such guide (11a) is provided with blocking means, e.g. with screws, to allow the blocking of the tool (10) in a desired position.

The machine is further provided with a pusher (5), predisposed to activate the support arm (4) in rotation in an active direction, so as to push the profiling tool (10) towards the profile (P) to be machined.

In the illustrated embodiment, the profile (P) is substantially located between the carriage (3) and the tool (10). In this case, the pusher (5) activates the support arm (4) in the rotation direction which nears the tool (10) to the carriage (3). In particular, the pusher (5) is interposed between the carriage (3) and the support arm (4). For example, the pusher (5) can be in the form of a pneumatic piston, as in the illustrated embodiment, in which the stem of the piston is associated to the carriage (3), while the cylinder or piston body is associated to the support arm (4). In an alternative embodiment, the pusher (5) might be in the form of a rotary actuator, interposed between the support arm (4) and the carriage (3), in the end zone of the support arm (4) pivoted about the rotation axis (X).

If the tool (10) is instead positioned between the carriage (3) and the profile (P), then the pusher (5) activates the support arm (4) in the rotation direction which distances the tool (10) from the carriage (3).

In substance, the pusher (5) is structured and actuated to push the tool (10) into contact with the profile (P) which is to be machined, so that the tool (10) exerts a predetermined pressure on the profile (P). The pressure exerted on the profile (P), together with the advancement along the profile (P) and the rotation, enables the tool (10) to shape the profile (P) by removal of material.

The pusher (5) is preferably configured to regulate the force exerted on the support arm (4). This enables obtaining the best working conditions in relation to the type of material the slab (S) is made of.

The profiling machine substantially functions in the following way.

The rotation of the carriage (3) along the annular guide (2) leads the tool (10) along an annular path. The presence of the support arm (4), rotatable with respect to the carriage (3) about the rotation axis (X), enables the tool (10), associated to the end of the arm (4) itself, to follow the profile (P) even if the profile is polygonal or in any case if it is different to the shape of the annular guide (2). In fact, the support arm (4) can rotate about the rotation axis (X) at all the portions in which the distance varies, measured on a plane perpendicular to the rotation axis (X) i.e. on a horizontal plane between the annular guide (2) and the profile (P). In the illustrated embodiment, the support arm (4) rotates, enabling the tool (10) to distance from the carriage (3) in all the portions where the distance between the profile (P) and the annular guide (2) increases. Vice versa, the support arm (4) rotates, enabling the tool (10) to near the carriage (3) in all the portions where the distance between the profile (P) and the annular guide (2) diminishes. In any case, the pusher (5) keeps the tool (10) in contact with the profile (P) with a pre-fixed force, while the guide unit (40) allows the tool (10) to be kept at a pre-fixed and constant distance with respect to the guide surface (L).

The profiling machine according to the invention can advantageously be equipped with a control module, connected to the first and second motors (31, 11) and configured to control the rotation speed of the first and second motors (31, 11). The control module is in the shape, for example, of an electronic processor.

The control module can be configured, by means of a control algorithm, to regulate the rotation speed of the first and second motors (31,11) in such a way that the peripheral speed of the profiling tool (10) is substantially constant relative to the profile (P). The use of this control algorithm enables compensating the speed variations which otherwise occur due to the conformation of the profile (P). In fact, along some portions of the profile (P) the peripheral speed of the tool (10) is concordant with the advancement velocity of the tool (10), while it is not concordant in other portions. For example, in the case of a rectangular profile (P) there are two consecutive sides along which the speeds are the same and the other two sides that are consecutive along which the speeds are different. Furthermore, with a constant speed of the carriage (3), the speed of the tool (10) varies when the rotation angle of the support arm (4) changes with respect to the carriage (10). Taking account of the shape of the profile (10), the control module, by means of the control algorithm, is able to regulate the rotation speed of the tool (10) and/or the displacement speed of the carriage (3) in such a way that the peripheral speed of the tool (10) is substantially constant relative to all points of the profile (P).

The control module is advantageously connected to the pusher (5) so as to regulate the force exerted on the support arm (4). This enables adapting the pressure exerted by the tool (10) on the profile (P) to the material of which the slab (S) is made, and to the section of the profile (P). In the illustrated embodiment, in which the pusher (5) is in the form of a pneumatic piston, the control module acts on the supply pressure on the piston. If the pusher (5) is in the form of a rotary actuator, the control module acts on the torque produced by the rotary actuator.

The machine according to the present invention achieves important advantages.

The configuration comprising the annular guide (2), which defines a closed-loop path, the carriage (3), movable along the annular guide (2), and the support arm (4), rotatably associated with the carriage (3) around a rotation axis (X) and bearing the profiling tool (10), together with the pusher (5) and the guide unit (40), enables obtaining precise and homogeneous machining of the profile (P). The profiling tool (10) is in fact kept in a constant orientation, i.e. it cannot have the rotation axis thereof tilted with respect to the profile (P). Furthermore, the profiling tool (10) is able to follow profiles of substantially any shape, compatibly with the shape and size of the tool (10) itself, very precisely, thanks to the guide action performed by the guide unit (40) through the abutment (41) if it follows the guide surface (L).

The use of a control module provided with an algorithm predisposed to maintain the peripheral speed of the profiling tool (10) substantially constant with respect to all the points of the profile (P) enables further improving the precision and homogeneity of the machining obtained.

## Claims

1. A profiling machine, **characterised in that** it comprises: an annular guide (2), which defines a closed-loop path; a carriage (3), movable along the annular guide (2); a support arm (4), rotatably associated with the carriage (3) about a rotation axis (X); a profiling tool (10), associated with the support arm (4); a pusher (5), configured to drive the support arm (4) in rotation in an active direction, in order to push the profiling tool (10) towards a profile (P) to be machined; a guide unit (40), structured to keep the tool (10) at a pre-fixed distance from a guide surface (L) located in a predetermined position with respect to the profile (P).

2. The profiling machine according to claim 1, wherein the guide unit (40) is associated with the support arm (4).

3. The profiling machine according to claim 2, wherein the guide unit (40) comprises an abutment (41) movable with respect to the tool (10) on a plane perpendicular to the rotation axis (X) of the support arm (4).

4. The machine according to claim 3, wherein the abutment (41) is associated with a bracket (42) movable along a radial direction (W) lying on the plane perpendicular to the rotation axis (X) of the support arm (4).

5. The profiling machine according to claim 1, comprising a motor (31) associated with the carriage (3) and configured to drive the carriage (3) in motion along the annular guide (2).

6. The profiling machine according to claim 1, wherein the pusher (5) is configured to regulate the force exerted on the support arm (4).

7. The machine according to claim 1, wherein the pusher (5) is interposed between the carriage (3) and the support arm (4).

8. The machine according to claim 1, wherein the profiling tool (10) is a rotating tool driven by a respective motor (11).

9. The profiling machine according to claim 1, comprising: a first motor (31) associated with the carriage (3) and configured to drive the carriage (3) in motion along the annular guide (2); a second motor (11) for driving the profiling tool (10) in rotation; a control module, connected to the first and second motors (31,11) and configured to control the rotation speed of the first and second motors (31,11).

10. The profiling machine according to claim 6, wherein the control module is configured to regulate the rotation speed of the first and second motors (31,11) in such a way that the peripheral speed of the profiling tool (10) is substantially constant relative to the profile (P).

11. The profiling machine according to claim 6, wherein the control module is connected to the pusher (5) so as to regulate the force exerted on the support arm (4).
